# EUROPEAN PATENT SPECIFICATION

(11) **EP 3 267 316 B1**
(45) Date of publication and mention of the grant of the patent: **15.05.2019**
(21) Application number: 17178524.9
(22) Date of filing: 28.06.2017
(51) Int. Cl.: G06F 11/07, G06F 11/30, G06F 11/34

(54) **RECORDING METHOD AND RECORDING APPARATUS OF POWER MODULE**
AUFZEICHNUNGSVERFAHREN UND AUFZEICHNUNGSVORRICHTUNG EINES LEISTUNGSMODULS
PROCÉDÉ D'ENREGISTREMENT ET APPAREIL D'ENREGISTREMENT DE MODULE DE PUISSANCE

(30) Priority: 08.07.2016 CN 201610536446
(43) Date of publication of application: 10.01.2018
(73) Proprietor: Delta Electronics (Shanghai) Co., Ltd., 201209 Shanghai (CN)
(72) Inventor: SUN, Zongyu, SHANGHAI, 201209 (CN); HUANG, Wei, SHANGHAI, 201209 (CN); LU, Yansong, SHANGHAI, 201209 (CN)
(74) Representative: Delumeau, François Guy

(56) References cited:
- US-A1- 2004 078 723
- US-A1- 2005 288 903
- US-A1- 2013 268 796
- US-A1- 2015 323 972

## Description

### TECHNICAL FIELD

The present disclosure generally relates to the field of power electronic technology, and more particularly, to a recording method and a recording apparatus of a power module.

### BACKGROUND

In high-power power electronic products, a power module composed of switching elements is the core of the product. The performance and design rules of the power module basically determine main performance indicators of the high-power power electronic products.

In the traditional high-power power electronic apparatus composed of inverters, devices such as frequency converters or converters occupy a large proportion, and the core part of such type of power electronic apparatus is the power module composed of a switching element.

The high-power inverter operates under high-voltage large-current environment. A client has a high demand on the reliability and availability of the converter system, and how to design intelligent power modules with convenient maintenance, high reliability, and ultrahigh availability is the most important issue in power electronic design.

At present, most manufacturers will provide a fault recording function on the converter system (including transducer, etc.). However, because the system needs to acquire a lot of information, the amount of data is large, which causes that in a certain storage capacity, the parameter sampling rate is relatively low, the recording time is relatively short, and waveforms of respective parameters at the occurrence of faults cannot be completely observed. If the system only relies on increasing the capacity of the storage device, it not only leads to increased costs, but also takes a long time to read data in the storage device by utilizing industrial interfaces.

In a certain situation, the fault needs to be reproduced, the parameters uploaded in real time are observed. There is no time limit to upload the parameters, so online real-time uploaded parameter waveforms are actually used to analyze the cause of the fault. Therefore, the system generally needs to be equipped with an online oscillography function. However, the existing online oscillography has great limitations, which lies in that the online oscillography may observe the waveform only when the converter is in a normally started state. If a previous fault causes damage of a certain element, the converter cannot run, and the cause of the fault cannot be found through the online oscillography. The fault may be analyzed only when the fault may be reproduced. As for some occasional faults, the online oscillography has great limitations.

On the other hand, more and more converter manufacturers are now purchasing power modules individually. However, in the on-site debugging or running, usually only the converter manufacturer staffs preform debugging, the module manufacturers generally do not send people to follow the debugging. Once a suspected power module fault causes the system to shut down, the on-site stuff can only replace the power module, and return the faulty power module to the module manufacturers for analyzing the problem. Since the module manufacturers are difficult to obtain various on-site conditions and parameters, and the factory test situation is different from the scene situation, it brings much inconvenience for the module manufacturers to analyze and solve the problem, or even the root cause cannot be found.

The existing power modules in the market are relatively simple in the fault information storage. When the fault occurs, only the fault type information will be stored. After the fault information of the power module is read, only what faults occurred at that time can be determined. When a plurality of faults occur, the occurrence order of the faults cannot be determined due to lack of time information of occurrence of the faults. No more detailed data information is available. In this case, it is difficult for a maintainer to extract useful information from the stored information, to analyze the root cause of the fault. Document US-A1-2013/268796 discloses a server and a method of recording environment parameters of the server. The server includes an environment monitoring system which monitors an environment of the server in real time.

### SUMMARY

Based on the limitation of system recording and the difficulty of finding the fault cause of the power module, the present disclosure proposes a recording method and a recording apparatus of a power module, which may realize the real-time recording function of the fault information and related parameters of the power module.

According to an aspect of the present invention as defined in claim 1, there is provided a recording method of a power module, including: step 1: acquiring a plurality of operating parameters of the power module through an acquiring unit; step 2: reading and processing the operating parameters through a processor, to obtain a plurality of real-time parameters of the power module; step 3: storing the real-time parameters in a first storage unit after the power module starts operating; and step 4: when the processor determines that an abnormality occurs in the power module, storing corresponding fault information and the real-time parameters of the power module in corresponding storage addresses of a second storage unit obtained according to a preset strategy, the recording method being characterized in that the second storage unit stores fault information of a plurality of faults occurring in the power module and the real-time parameters of the power module within a certain period of time before and after occurrence of each fault for the most recent N faults, wherein N is a positive integer; and the fault information contains a fault occurrence time obtained by reading the time of a real-time clock, a fault position and a fault type determined by the processor.

In an embodiment, the real-time parameters of the power module includes the operating parameters after sampling processing and a plurality of core data parameters of the power module calculated according to the operating parameters.

In an embodiment, the step 3 includes: presetting a time length T, the first storage unit storing the real-time parameters within the time length T, and circularly updating data in the first storage unit when no abnormality occurs in the power module; when the abnormality occurs in the power module, a timer begins to timekeeping, when the timer does not reach a time length of T/2, continuously updating the data in the first storage unit, and when the timer reaches the time length of T/2, stopping updating the data in the first storage unit.

In an embodiment, the step 4 includes: step 41: reading time of a real-time clock and a total number of faults in the second storage unit, increasing the total number of the faults by one, and updating the total number of the faults in the second storage unit; step 42: obtaining the storage addresses according to the preset policy, that is, calculating the storage addresses of fault information and the real-time parameters corresponding to a current fault in the second storage unit, according to the updated total number of the faults; and step 43: when the abnormality occurs in the power module, the timer starts timekeeping, when the timer reaches the time length of T/2, storing the fault information and the real-time parameters stored in the first storage unit corresponding to the current fault in the storage addresses described in the step 42.

In an embodiment, when the timer reaches the time length of T/2, the first storage unit stores the real-time parameters within the time length of T/2 before the abnormality occurs in the power module and the real-time parameters within the time length of T/2 after the abnormality occurs in the power module.

In an embodiment, the recording method of a power module further includes a step 5: according to the real-time parameters stored in the second storage unit, generating a plurality of real-time parameter waveforms corresponding to any one or more of the most recent N faults.

In an embodiment, the fault information contains a fault occurrence time obtained by reading the time of the real-time clock, a fault position and a fault type determined by the processor.

In an embodiment, the power module transmits the fault information and the corresponding real-time parameters to a system by coding.

According to another aspect of the present invention as defined in claim 8, there is provided a recording apparatus within a power module, including: an acquiring unit, configured to acquire a plurality of operating parameters of the power module; a processor, configured to read and process the operating parameters, to obtain a plurality of real-time parameters of the power module; a first storage unit, configured to store the real-time parameters after the power module starts operating; and a second storage unit, configured to store corresponding fault information and the real-time parameters of the power module in corresponding storage addresses obtained according to a preset strategy, when the processor determines that an abnormality occurs in the power module, the recording apparatus being characterized in that the second storage unit is able to implement storing fault information of a plurality of faults occurring in the power module and record the real-time parameters of the power module within a certain period of time before and after occurrence of each fault for the most recent N faults, wherein N is a positive integer; and the fault information contains a fault occurrence time obtained by reading the time of a real-time clock, a fault position and a fault type determined by the processor.

In an embodiment, the processor conducts sampling processing on the operating parameter of the power module and calculates a plurality of core data parameters of the power module according to the operating parameters of the power module, wherein the real-time parameters of the power module includes the operating parameters after sampling processing and the calculated core data parameters of the power module.

In an embodiment, a time length T is preset, the first storage unit stores the real-time parameters within the time length T, and data in the first storage unit is circularly updated when no abnormality occurs in the power module; when the abnormality occurs in the power module, a timer begins to timekeeping, when the timer does not reach a time length of T/2, the data in the first storage unit is continuously updated, and when the timer reaches the time length of T/2, the data in the first storage unit is stopped updating.

In an embodiment, the recording apparatus within a power module further includes: a real-time clock, wherein when the abnormality occurs in the power module, the processor reads time of the real-time clock and a total number of faults in the second storage unit, increases the total number of the faults by one, and updates the total number of the faults in the second storage unit, according to the updated total number of the faults, calculates the storage addresses of fault information and the real-time parameters corresponding to a current fault in the second storage unit; the timer starts timekeeping, when the timer reaches the time length of T/2, stores the fault information and the real-time parameters in the first storage unit corresponding to the current fault in the calculated storage addresses.

In an embodiment, when the timer reaches the time length of T/2, the first storage unit stores the real-time parameters within the time length of T/2 before the abnormality occurs in the power module and the real-time parameters within the time length of T/2 after the abnormality occurs in the power module.

In an embodiment, the recording apparatus within a power module further includes: a fault waveform generating unit, configured to generate a plurality of real-time parameter waveforms corresponding to any one or more of the most recent N faults, according to the real-time parameter stored in the second storage unit.

In an embodiment, the fault information contains a fault occurrence time obtained by reading the time of the real-time clock, a fault position and a fault type determined by the processor.

In an embodiment, the first storage unit is a static random access memory and the second storage unit is a flash memory.

The present disclosure has at least the following beneficial effects over the prior art: the information such as the fault type and the occurrence time may be stored in the storage device. By reading the stored information, the occurrence frequency of the fault can be clearly learned and it is convenient for the maintainer to analyze some common faults. Meanwhile, by learning the number of the faults and the fault type, operating condition of the power module may be better mastered, conducive to the maintenance of the power module. The parameters within a certain period of time before and after a fault occurs in the power module are recorded and stored. The real-time parameters when the most recent N faults occur may be stored. By reading real-time parameter waveforms of any one or more of the most recent N faults, the maintainer may analyze waveform changes of respective parameters when the power module is faulty, so as to determine the root causes of fault.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 schematically shows a flow chart of a recording method of a power module according to the present disclosure;
Fig. 2 schematically shows a method flow chart of a first storage unit storing data in the recording method of a power module according to the present disclosure;
Fig. 3 schematically shows a method flow chart of a second storage unit storing data in the recording method of a power module according to the present disclosure;
Fig. 4 schematically shows a functional block diagram of a recording apparatus within a power module according to the present disclosure;
Fig. 5 schematically shows a structural diagram of a specific embodiment of a recording apparatus within a power module according to the present disclosure;
Fig. 6 schematically shows a schematic diagram of waveforms of the most recent N faults generated by a recording apparatus of a power module according to the present disclosure;
Figs. 7A-7B schematically show a current waveform corresponding to a certain fault recorded by a recording apparatus of a power module according to the present disclosure, and the enlarged view thereof;
Fig. 8 schematically shows a circuit diagram of a power module with a built-in recording apparatus according to the present disclosure;
Fig. 9 schematically shows a structural diagram of a power module with a built-in recording apparatus according to the present disclosure;
Figs. 10A-10C schematically show circuit diagrams of a power conversion circuit;
Fig. 11 schematically shows a circuit block diagram of parallel power modules in the prior art; and
Fig. 12 schematically shows a circuit block diagram of parallel power modules according to the present disclosure.

### DETAILED DESCRIPTION

The embodiments of the present disclosure will now be described more fully with reference to accompanying drawings. Providing these embodiments makes the present disclosure more thorough and complete, but should not be construed as the implementation of the present disclosure. The drawings are merely illustrative of the present disclosure and are not necessarily drawn to scale. The same reference numerals in the drawings denote the same or similar parts, and thus repeated description thereof will be omitted.

In addition, the features, structures, method steps or characteristics described may be combined in one or more embodiments in any suitable manner. In the following description, many specific details are provided to give a full understanding of the embodiments of the present disclosure. However, those skilled in the art will appreciate that, the technical solutions of the present disclosure may be practiced without one or more of these specific details, or other methods, elements, materials and the like may be employed. In other instances, well-known structures, methods, apparatuses, materials or operations are not shown or described in detail to avoid obscuring aspects of the present disclosure.

In the context of the embodiments and the patent application, unless specified in the text, the articles "a/an" and "the" may refer to one or more. In the present disclosure, description involved with "couple" may generally refer to that a component is indirectly connected to another component through other components, or that a component is directly connected to another component without through other components.

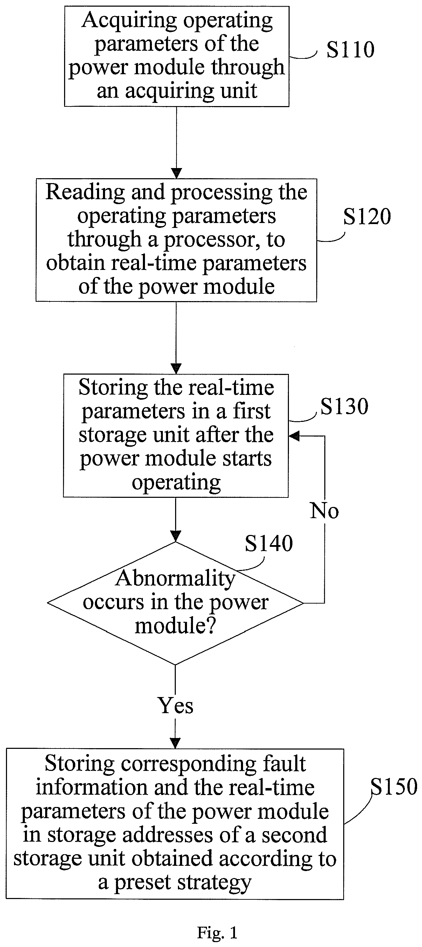

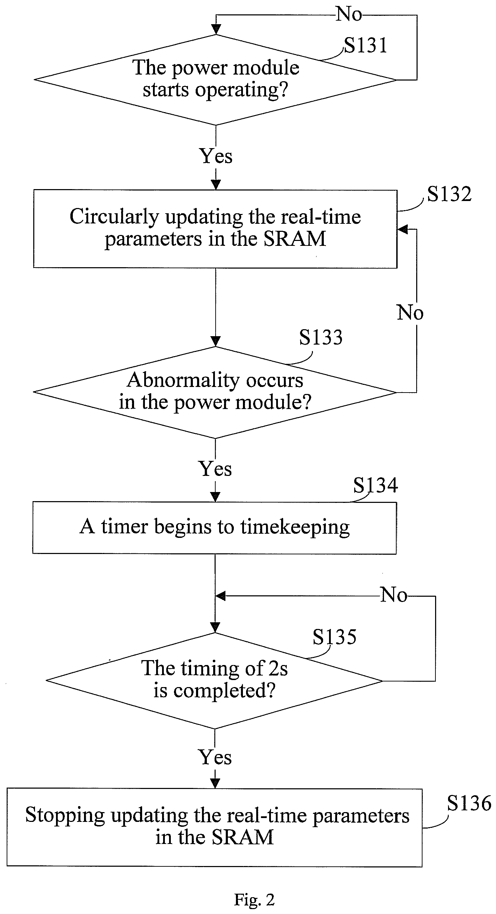

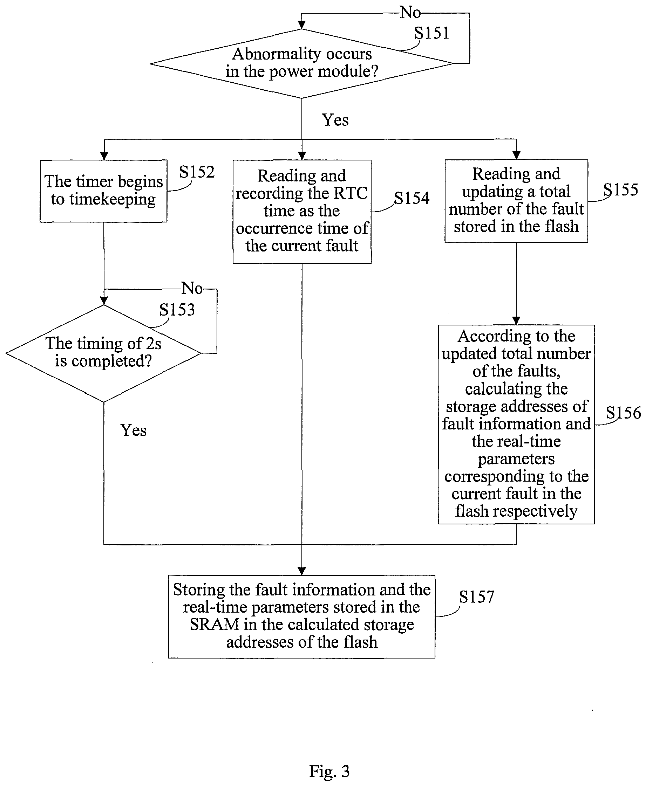

Referring to Figs. 1-3, Fig. 1 schematically shows a flow chart of a recording method of a power module according to the present disclosure; Fig. 2 schematically shows a method flow chart of a first storage unit storing data in the recording method of a power module according to the present disclosure; and Fig. 3 schematically shows a method flow chart of a second storage unit storing data in the recording method of a power module according to the present disclosure.

As shown in Fig. 1, a recording method of a power module according to the present disclosure includes:
step S110: acquiring a plurality of operating parameters of the power module through an acquiring unit;
step S120: reading and processing the operating parameters through a processor, to obtain a plurality of real-time parameters of the power module;
step S130: storing the real-time parameters in a first storage unit after the power module starts operating; and
step S140: the processor determining whether an abnormality occurs in the power module, when the processor determines that the abnormality occurs in the power module, proceeding into the next step; otherwise, returning to the step S130 and continuing circularly updating the real-time parameters in the first storage unit; and
step S150: storing corresponding fault information and the real-time parameters of the power module in corresponding storage addresses of a second storage unit obtained according to a preset strategy.

Further, in step S110, the operating parameters include, but not limited to, an output current of the power module, a BUS voltage across a DC busbar, humidity, an ambient temperature, a radiator temperature, a surface temperature of a DC support capacitor, an inlet temperature of a cooling component, an outlet temperature of a cooling component, an internal temperature of a switching element (e.g. IGBT), a frequency of a switching signal input by a system, and so on.

Further, in the step S120, the real-time parameters of the power module include the operating parameters after sampling processing and a plurality of core data parameters of the power module calculated according to the operating parameters. In the embodiment, the core data parameters include, but not limited to, an output power of the power module, a real-time loss power, an internal junction temperature of the switching element, a capacitor surface temperature rise and a current valid value.

Still further, in the recording method of the power module, the step S130 includes: presetting a time length T, the first storage unit storing the real-time parameters within the time length T, and circularly updating data in the first storage unit when no abnormality occurs in the power module; when the abnormality occurs in the power module, a timer begins to timekeeping, when the timer does not reach a time length of T/2, continuously updating the data in the first storage unit, and when the timer reaches the time length of T/2, stopping updating the data in the first storage unit. Detailed implementation steps are shown in Fig. 2.

In Fig. 2, the preset time length T is equal to 4s. Of course, the specific preset time length T may be set according to actual needs. This does not constitute a limitation of the present disclosure. The first storage unit uses an SRAM (Static Random Access Memory) as an example.

Firstly, step S131 is executed to determine whether or not the power module starts operating. If the power module starts operating, the process proceeds to step S132; otherwise, it is continued to determine whether or not the power module starts operating.

It should be noted that, the real-time recording may be activated after it is detected that the power module is started, so as to avoid the case due to damage of the power module itself or other reasons, when the power module does not start operating after being powered on, recording is conducted after a fault is detected. The reason is that, the waveforms recorded in this case may be meaningless for the maintenance analyst and it is more likely to overwrite the valid waveform data that has been recorded before.

Step S132: the real-time parameters in the SRAM are circularly updated. The data within the time length of T is stored in the SRAM. In the present embodiment, the time length of T is equal to 4s. Specifically, when the startup signal of the power module is detected, the processor will store the operating parameters after sampling processing and the calculated core data parameters in the information temporary storage section, i.e., SRAM, in real time. In the embodiment, the sampling frequency is twice or more than twice of the frequency of the switching signal input by the system. According to the Shannon's sampling law, when the sampling frequency is more than twice of the switching frequency, the sampling signal may track the actual output signal well.

Step S133: it is determined whether an abnormality occurs in the power module. If it does, the process proceeds into step S134; otherwise, the process returns to the step S132 and continues updating the real-time parameter in the SRAM.

Step S134: a timer begins to timekeeping.

Step S135: it is determined whether or not the timing of 2s is completed. If the timing reaches 2s, the process proceeds to step S136; otherwise, it is continued to determine whether or not the timing of 2s is completed and the data in the SRAM is continued circularly updating.

Step S136: the real-time parameters in the SRAM is stopped updating. At this time, timing of the timer reaches 2s, and the SRAM stores the real-time parameters within the time length of 2s before the abnormality occurs in the power module and the real-time parameter within the time length of 2s after the abnormality occurs in the power module.

Still further, in the recording method of a power module, the step S150 includes: reading time of a real-time clock and a total number of faults in the second storage unit, increasing the total number of the faults by one, and updating the total number of the faults in the second storage unit; obtaining the storage addresses according to the preset policy, that is, calculating the storage addresses of fault information and the real-time parameters corresponding to the current fault in the second storage unit, according to the updated total number of the faults; and when the abnormality occurs in the power module, the timer starts timekeeping, when the timer reaches the time length of T/2, storing the fault information and the real-time parameters stored in the first storage unit corresponding to the current fault in the calculated storage addresses. Detailed implementation steps are shown in Fig. 3.

In Fig. 3, still, for example, the preset time length T is equal to 4s, and the first storage unit is the SRAM. Of course, the specific preset time length T may be set according to actual needs. This does not constitute a limitation of the present disclosure. The second storage unit uses a flash as an example.

Firstly, step S151 is executed to determine whether or not the abnormality occurs in the power module. If it does, the process proceeds to following steps S152, S154 and S155; otherwise, it is continued to determine whether or not the abnormality occurs in the power module.

Step S152: when the abnormality occurs in the power module, the timer begins to timekeeping. It should be noted that, the timer in step S152 is the same as that in the step S134, and it may be referred to as a fault timer.

Step S153: it is determined whether or not the timing of 2s is completed. If the timing reaches 2s, the process proceeds to step S157; otherwise, it is continued to determine whether or not the timing of 2s is completed and the data in the SRAM is continued circularly updating.

Step S154: when the abnormality occurs in the power module, the RTC (Real-time clock) time is read and recorded as the occurrence time of the current fault.

Step S155: When the abnormality occurs in the power module, a total number of the fault stored in the flash is read and updated. For example, the total number of faults occurred previously and stored in the flash is read, the read total number of faults is increased by "1" and stored as a new total number of faults.

Step S156: according to the updated total number of the faults, the storage addresses of fault information and the real-time parameters corresponding to the current fault in the flash are calculated, respectively. According to the recording method of the power module in the embodiments of the present disclosure, it is possible to store the fault information and the real-time parameters of a plurality of faults, so that the storage address of fault information of the current fault in the flash and the storage address of the real-time parameters of the current fault in the flash may be respectively calculated, according to the total number of the faults.

Step S157: When the timing reaches 2s, the fault information corresponding to the current fault and the real-time parameters stored in the SRAM are stored in the corresponding storage addresses of the flash calculated in the step S156. The fault information includes a fault occurrence time obtained by reading the RTC time in the step S154, a fault position and a fault type determined by the processor. The fault type includes, but not limited to, an output overcurrent fault of the power module, an overvoltage fault of the BUS voltage, a fault of too high surface temperature of the DC support capacitor, a fault of too high temperature rise of the DC support capacitor surface temperature, a fault of too high junction temperature of the switching element, an abnormal fault of the switching signal frequency, a power down fault of the module auxiliary power and a short circuit fault of the module switching element.

It is to be noted that, the steps S152, S154 and S155 may be started implementing at the same time when the abnormality occurs in the power module. Alternatively, the timer may start timekeeping and read the RTC time, and then read the total number of faults occurred previously which is stored in the flash. Step S157 is executed after the timing 2s of the timer is completed, the RTC time has been read and storage addresses of the fault information and the real-time parameters corresponding to the current fault in the flash are calculated.

In the recording method of a power module according to the embodiment of the present disclosure, the fault real-time parameters stored in the second storage unit (flash) corresponds to the data within the time period of 2s before and after the fault occurs. When a fault occurs in the power module, the fault timer is started immediately. Before the timing of the timer does not reach 2s, the acquired operating parameters and calculated real-time parameters are continuously stored in the SRAM. When the timing of the timer reaches 2s, the data in the SRAM is stopped updating and the address of the updated last data in the SRAM is recorded. Starting from a next address of the address, the data in the SRAM are sequentially read, the read data are sequentially stored in the calculated address for storing the real-time parameters, until all the data in the SRAM is transferred to the flash.

In an exemplary embodiment, the recording method is capable of realizing storing the fault information of a plurality of faults occurring in the power module, and recording the real-time parameters of the power module within a certain period of time (e.g., 2s before and after the fault) before and after occurrence of each fault for the most recent N faults, wherein N is a positive integer. For example, N equals to 7. Of course, the real-time parameters that how many numbers of faults may be stored is specifically determined based on the capacity of the second storage unit and/or selected according to actual needs.

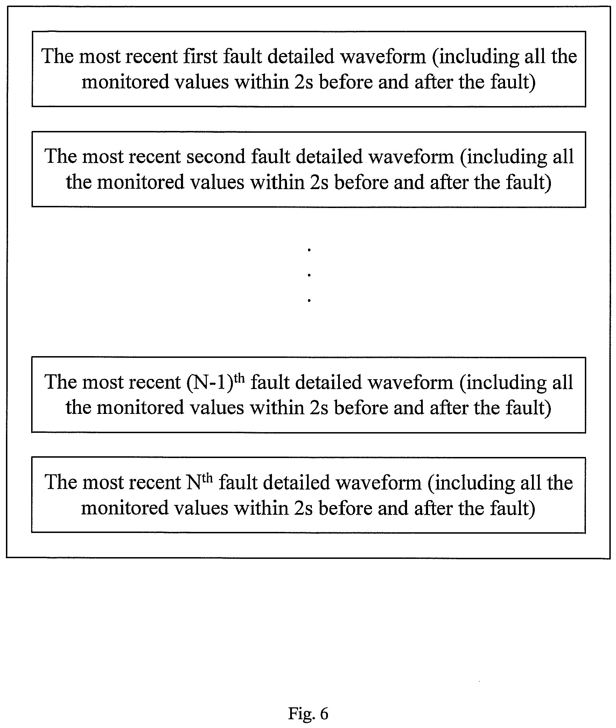

Still further, the recording method of the power module further includes a following step: according to the real-time parameters stored in the second storage unit, generating a plurality of real-time parameter waveforms corresponding to any one or more of the most recent N faults. Refer to Fig. 6, Fig. 6 schematically shows a schematic diagram of waveforms of the most recent N faults generated by a recording apparatus of a power module according to the present disclosure. As shown in Fig. 6, the recording apparatus preforms real-time recording on the most recent N faults occurring in the power module. The most recent first fault detailed waveform, the most recent second fault detailed waveform...the most recent (N-1)th fault detailed waveform and the most recent Nth fault detailed waveform may be generated based on the stored real-time parameters. In the embodiment, the most recent first fault detailed waveform, the most recent second fault detailed waveform...the most recent (N-1)th fault detailed waveform and the most recent (N)th fault detailed waveform include all the corresponding monitored values within 2s before and after the fault occurs.

In an exemplary embodiment, the power module transmits the fault information and the corresponding real-time parameters to a system by coding. In particular, the power module transmits information with, for example, a converter system, by means of coding. When the system requests to read fault information or fault waveforms, the power module may transmit data to the system via coding. When the system needs to clear faults or other measures, the power module will take appropriate measures.

According to the embodiment of the present disclosure, the recording method of the power module having the above function can record and store the acquired operating parameters and the calculated real-time parameters within a certain period of time before and after the fault occurs, and at the same time, the method has the function of generating the full waveforms at time of the most recent N faults occurring according to the stored real-time parameters. The maintainer may read the real-time parameter waveforms of any one or more of the N faults, so as to analyze waveform changes of respective parameters when the power module is faulty, thus determining the root cause of the fault.

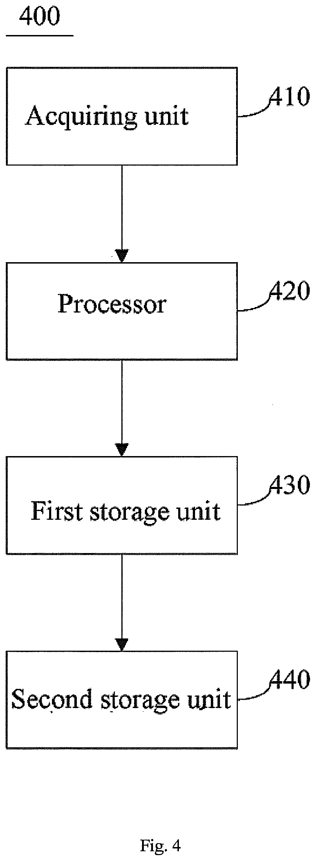

Fig. 4 shows a functional block diagram of a recording apparatus 400 within a power module according to the present disclosure. As shown in Fig. 4, the apparatus 400 includes: an acquiring unit 410, configured to acquire a plurality of operating parameters of the power module; a processor 420, configured to read and process the operating parameters, to obtain a plurality of real-time parameters of the power module; a first storage unit 430, configured to store the real-time parameters after the power module starts operating; and a second storage unit 440, configured to store corresponding fault information and the real-time parameters of the power module in corresponding storage addresses obtained according to a preset strategy, when the processor determines that an abnormality occurs in the power module.

In an exemplary embodiment, the acquiring unit 410 mainly acquires operating parameters of the power module, such as an output current of the power module, a BUS voltage across a DC busbar, a surface temperature T1 of a DC support capacitor, an inlet temperature T2 of a cooling component, an outlet temperature T3 of a cooling component, an internal temperature T4 of a switching element, an ambient temperature T5, a frequency f of a switching signal input by a system, and the like.

In an exemplary embodiment, the processor 420 conducts sampling processing on the operating parameters of the power module and calculates a plurality of core data parameters of the power module according to the operating parameters of the power module. In the embodiment, the real-time parameters of the power module include the operating parameters after sampling processing and the calculated core data parameters of the power module. The core data parameters may intuitively determine the operating status of the power module.

In an exemplary embodiment, the second storage unit 440 is able to store fault information of a plurality of faults occurring in the power module and record the real-time parameters of the power module within a certain period of time before and after occurrence of each fault for the most recent N faults, wherein N is a positive integer.

In an exemplary embodiment, the first storage unit 430 stores the real-time parameters within a preset time length T. When no abnormality occurs in the power module, data in the first storage unit 430 is circularly updated. When the abnormality occurs in the power module, a timer begins to timekeeping, when the timer does not reach a time length of T/2, the data in the first storage unit 430 is continuously updated, and when the timer reaches the time length of T/2, the data in the first storage unit 430 is stopped updating.

In an exemplary embodiment, the recording apparatus further includes a real-time clock. In the embodiment, when the abnormality occurs in the power module, the processor 420 reads time of the real-time clock and a total number of faults in the second storage unit 440, increases the total number of the faults by one, and updates the total number of the faults in the second storage unit 440, according to the updated total number of the faults, calculates storage addresses of fault information and the real-time parameters corresponding to a current fault in the second storage unit 440; the timer starts timekeeping, when the timer reaches the time length of T/2, stores the fault information and the real-time parameters stored in the first storage unit 430 corresponding to the current fault in the calculated storage addresses of the second storage unit 440.

In an exemplary embodiment, when the timer reaches the time length of T/2, that is, when the data in the first storage unit 430 is stopped updating, the first storage unit 430 stores the real-time parameters within the time length of T/2 before the abnormality occurs in the power module and the real-time parameters within the time length of T/2 after the abnormality occurs in the power module.

In an exemplary embodiment, the first storage unit 430 is a static random access memory (SRAM) and the second storage unit 440 is a flash memory. Of course, the SRAM and flash described in the present disclosure are for illustrative description and are not intended to limit the present disclosure. That is, any suitable storage manner may be selected depending on the requirement of the system design.

In an exemplary embodiment, the fault information contains the fault occurrence time obtained by reading the time of the real-time clock, the fault position and the fault type determined by the processor 420.

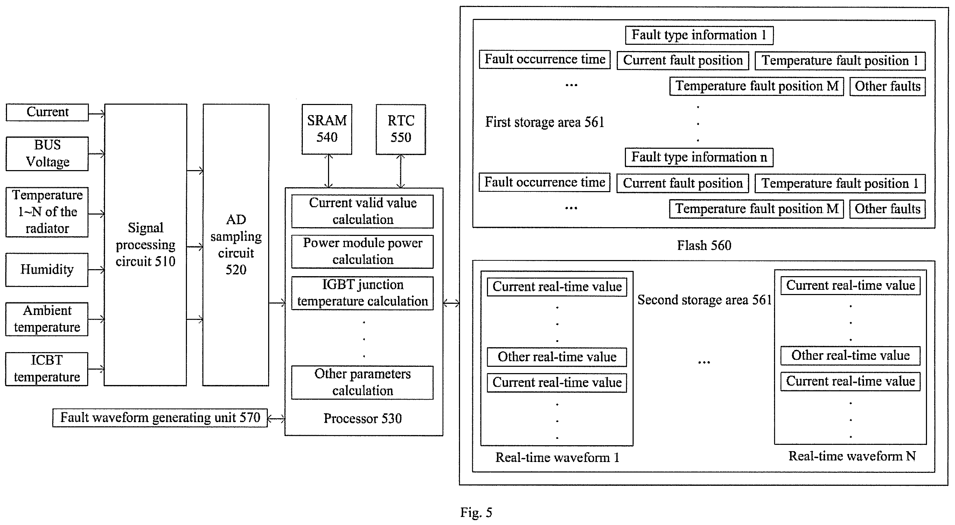

Fig. 5 is a structural diagram of a specific embodiment of a recording apparatus. As shown in Fig. 5, the recording apparatus includes: a signal processing circuit 510, configured to process the operating parameters of the power module acquired by various types of sensors, so as to be adapted to the input of an AD sampling circuit 520; the AD sampling circuit 520, configured to electrically couple the signal processing circuit 510 and a processor 530, respectively, so as to sample the operating parameters processed by the signal processing circuit 510 and input the sampled operating parameters to a processor 530; the processor 530 (e.g., an MUC or ASIC device), configured to electrically couple to the AD sampling circuit 520, the first storage unit SRAM 540, a real-time clock RTC 550, and a second storage unit flash 560, respectively. The processor 530 calculates the operating parameters of the power module, to obtain the core data parameters of the power module.

In an exemplary embodiment, the flash 560 may include a first storage area 561 and a second storage area 562, configured to store the fault information and the real-time parameters, respectively. In the embodiment, the first storage area 561 of the flash 560 stores fault information of 1∼n faults occurring in the power module, wherein n is a positive integer, and n may be greater than or equal to 1000. The fault information includes a fault occurrence time, a current fault position, a temperature fault position 1 to a temperature fault position M, and other fault type information, wherein M is a positive integer. The second storage area 562 of the flash 560 may store the real-time parameters of the power module when each fault of the most recent N faults occurs, wherein N is a positive integer. For example, when N is equal to 7 and the real-time parameters of the most recent fault are stored, the real-time parameters of the most recent fault will overwrite the real-time parameters of the previous fault, to ensure that the real-time parameters stored in the storage device are the real-time parameters when the most recent 7 faults occur. The real-time parameters include data within a certain period of time (e.g., before and after 2s) before and after occurrence of each fault in the most recent N faults.

In an exemplary embodiment, the recording apparatus further includes a fault waveform generating unit 570, configured to generate a plurality of real-time parameter waveforms corresponding to any one or more of the most recent N faults, according to the real-time parameters stored in the second storage area 562 of the second storage unit 560. The fault waveform generating unit 570 is generally a display screen, such as an industrial computer. Of course, the fault waveform generating unit 570 can be remote display devices.

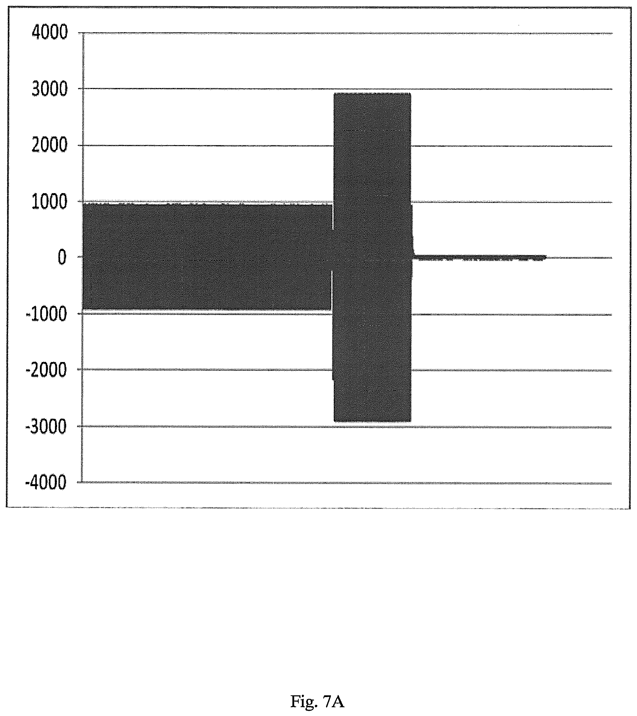

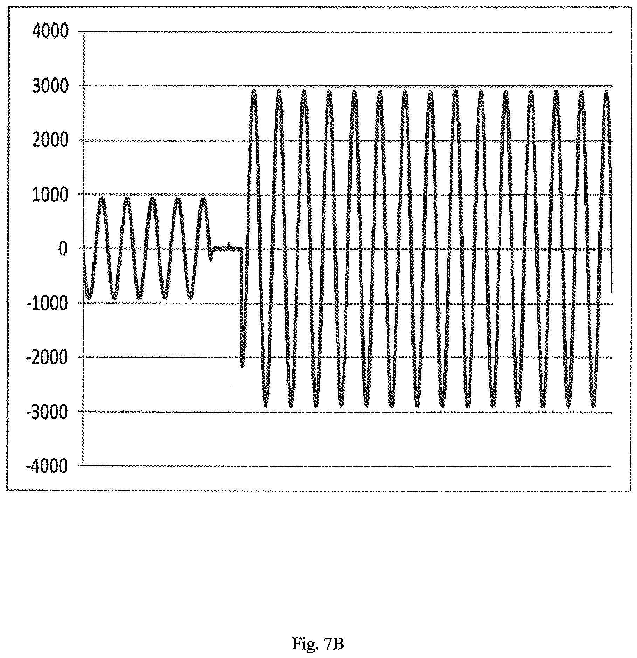

Fig. 7A schematically shows a certain fault current waveform read by a recording apparatus within a power module according to the present disclosure. Fig. 7B shows an enlarged view of the fault current waveform of Fig. 7A. As shown in Fig. 7A, it is possible to clearly observe the real-time variation of the current when the fault occurs.

Under certain conditions, the recording apparatus stores the acquired data and the data obtained by calculation processing into a storage device (for example, flash 560). The maintainer reads the data in the storage device through a general communication interface, and intuitively analyzes the real-time recording information, which is conducive to effectively and conveniently determining the root cause of abnormality or fault. Ultimately, the power module has an extremely high availability and intelligence.

For example, the recording apparatus in the power module stores the real-time parameters of the most recent 7 faults and obtains the parameter waveforms corresponding to the most recent 7 faults. When the maintainer connects the power module to a PC through a communication interface and clicks a connection button on the HMI (Human Machine Interface) interface, the power module automatically uploads all the fault information after receiving the connection command. The HMI interface extracts time of occurrence of the most recent 7 faults, according to the stored fault information. The maintainer may click the time to read the corresponding parameter waveforms. The maintainer may not only view the parameter waveforms of the most recent first fault and analyze the fault cause of the power module, but also may view the parameter waveforms of a plurality of faults previously, helping to analyze system-level problems. Meanwhile, the maintainer may read the time and corresponding fault type of all faults, determine the times of the faults, the frequencies of the faults and other information, help to analyze the root cause of the fault occurring in the power module and system, maintain stability of the power module and system, an improve the intelligence of the power module.

The recording apparatus provided by the embodiment of the disclosure may acquire the operating parameters and environmental parameters related to the operating status of the power module, store information such as the fault type, the time of occurrence of the fault, and corresponding parameters of the power module when the most recent N faults occur, into the storage device. By determining the fault type (more than thousands of faults may be stored) and matching with the time of occurrence of the fault, it is possible to clearly learn about the frequency of occurrence of the fault and other information, to facilitate the maintainer to analyze some common faults. At the same time, based on acquaintance of times of faults and fault types, the maintainer may better grasp the operating status of the power module, and propose targeted countermeasures for maintenance of the power module.

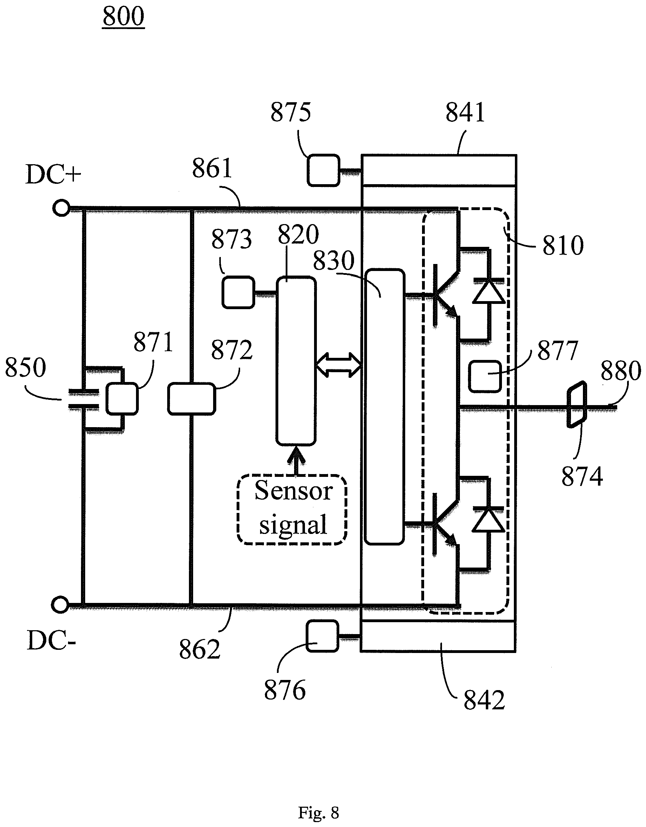

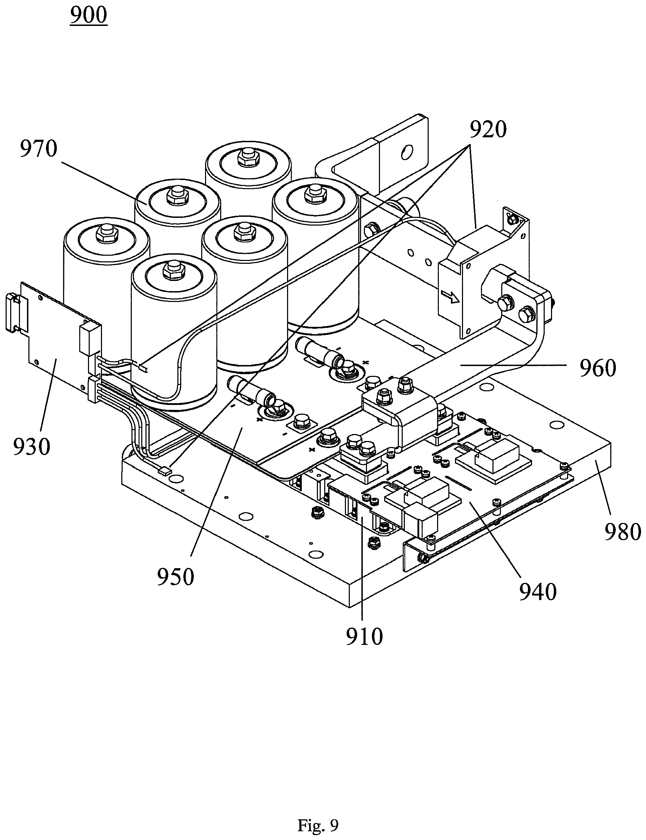

The present disclosure also discloses a power module. The power module includes: a power conversion circuit; a plurality of sensors, dispersed in the power module; a recording apparatus, communicating signals with the plurality of sensors; and a drive control device, electrically coupled to the power conversion circuit and the recording apparatus. Refer to Figs. 8 and 9 for the specific structure of the power module.

Taking a single-phase power module as an example, Fig. 8 shows a circuit diagram of a power module with a built-in recording apparatus according to the present disclosure. As shown in Fig. 8, the power module 800 includes: a power conversion circuit 810; various types of sensors (e.g., 871 to 877), dispersed in the power module 800; a recording apparatus 820; and a drive control device 830. In the embodiment, the recording apparatus 820 receives signals acquired by the various types of sensors. The drive control device 830 is electrically coupled to the power conversion circuit 810 and the recording apparatus 820. The power module 800 further includes a cooling component (a cooling component inlet 841, a cooling component outlet 842), a DC support capacitor 850, a DC busbar (a positive DC busbar 861, a negative DC busbar 862), and an AC busbar 880.

In an exemplary embodiment, the power conversion circuit 810 is a single-phase circuit, which receives a DC input power and outputs a single-phase AC power. The power conversion circuit 810 includes a plurality of switching elements. The switching elements may be IGBTs or MOSFETs and the like.

The various types of sensors include: a humidity sensor (not shown in Fig. 8), configured to measure internal humidity of the power module; a first temperature sensor 871, configured to measure the surface temperature of the DC support capacitor and mounted on a surface of the DC support capacitor 850; a second temperature sensor 873, configured to measure the ambient temperature; a third temperature sensor 877, configured to measure an internal temperature of the switching element in the power conversion circuit 810; a fourth temperature sensor 875, configured to measure the temperature of the cooling component inlet 841; a fifth temperature sensor 876, configured to measure the temperature of the cooling component outlet 842; a voltage sensor 872, configured to measure a voltage across the positive DC busbar 861 and the negative DC busbar 862 and coupled between the positive DC busbar 861 and the negative DC busbar 862; a current sensor 874, arranged on the AC busbar 880 and configured to measure the output current of the power module by mutual inductance. The role of the humidity sensor is illustrated as follows. The humidity sensor is employed to detect the humidity of the environment where the power module is located. In combination with changes in humidity and ambient temperature, it is determined whether condensation may exist on the element of the power module, so as to take corresponding corrective measures with respect to the environment which may generate the condensation. It may be even determined that some failures are caused due to the condensation.

The recording apparatus 820 is configured to receive signals acquired by the sensors for measuring various operating parameters of the power module; record the relevant parameters of the power module measured by the plurality of sensors, the time of the fault occurring in the power module and the fault type; store a plurality of fault information of the power module and corresponding parameter waveforms of the most recent N faults. Specific details can refer to the above description of the recording method and recording apparatus, which will not be repeated herein.

The drive control device 830 is electrically coupled to the power conversion circuit 810, to perform necessary logic processing on the switching signal input by the system, to drive the switching element in the power conversion circuit 810 to perform related actions. In the embodiment, the logic processing can be performed through any one of existing ways, which will not be described in detail herein. The drive control device 830 is also electrically coupled to the recording apparatus 820. The drive control device 830 monitors whether or not the switching element is short-circuited in real time. Once the short circuit occurs, the drive control device 830 immediately feeds back a short circuit fault signal to the recording apparatus 820. At the same time, in the case where a fault occurs in the power module 800, the recording apparatus 820 will send a blocking signal to the drive control device 830, and the drive control device 830 will in turn blocks the switching signal, and the power conversion circuit 810 will stop outputting.

The switching device cooling component may be a water-cooled cooling component and/or an air-cooled cooling component. The switching device cooling component includes a cooling component inlet 841 and a cooling component outlet 842. The DC busbar includes the positive DC busbar 861 and the negative DC busbar 862. The DC support capacitor 850 is electrically coupled between the positive DC busbars 861 and the negative DC busbars 862. In particular, the DC support capacitor 850 is electrically coupled to DC positive and negative terminals of the power module, respectively. The AC busbar 880 is electrically coupled to an AC terminal of the power module 800.

Fig. 9 shows a structural diagram of a power module with a built-in recording apparatus according to the present disclosure. As shown in Fig. 9, the power module 900 includes: a power conversion circuit 910; a plurality of sensors 920 (not all of which are identified in Fig. 9); a recording apparatus 930; a drive control device 940; a DC busbar 950; an AC busbar 960; a plurality of DC support capacitors 970; and a switching element cooling component 980. It can be seen from Fig. 9 that, with respect to the converter system provided with a recording function, the power module 900 integrated with the recording apparatus and various types of sensors makes simple wiring, saves space and the signal transmission is accurate. At the same time, the recording apparatus 930 is provided at an edge of the power module 900, which will not occupy too much space inside the power module 900.

It will be apparent to those skilled in the art that, Figs. 8 and 9 only schematically show a partial structure of the power module. The power module also includes other necessary structural components (not shown).

The power module provided by the above embodiment acquires, calculates and stores parameters by itself, which has great superiority over that the whole converter system acquires, calculates and stores parameters. The superiority is at least in following three points. Firstly, with regard to data acquisition of the power module, the converter system mainly focuses on the output characteristics of the power module, including the output current, the switching element temperature, the BUS voltage and so on. However, the power module in the embodiment of the present disclosure concerns with all the parameters of the whole module that can be monitored, which may help better analyzing the fundamental nature of the module itself. Secondly, in comparison with the entire converter system, the data needs to be acquired, calculated and stored by the power module itself will be much less. The sampling frequency and storage frequency of the parameters in a limited storage space may be relatively higher, and may store data within a longer period of time (for example, storing data within 2s before and after occurrence of the fault, totally data within 4s), which facilitates completely observing more detailed data information of respective parameters within a period of time before and after a fault occurs in the module. However, a high sampling rate may better reproduce parametric waveforms when the power module has a fault, which may more effectively assist the analyst to analyze the cause of the fault. Thirdly, if the converter system acquires detailed parameter information in the power module just as what the power module does, it is bound to connect various sensors in the power module with the system. The power module is served as a main part for power output in the system. If too many lines are drawn from the power module, it will cause difficulty in wiring, and even cause high and low voltage wiring disorder. In addition to high and low voltage insulation problems, signal transmission line interference problems also exist, resulting in signal transmission distortion. It cannot help a maintainer to preform analysis, or even it will lead to misjudgment of problems by the maintainer. The power module monitors its underlying parameters and stores the acquired parameters into the storage device under certain conditions, reducing burden of the converter system and ensuring integrity of underlying parameters, which greatly facilitates the module analysis and system analysis.

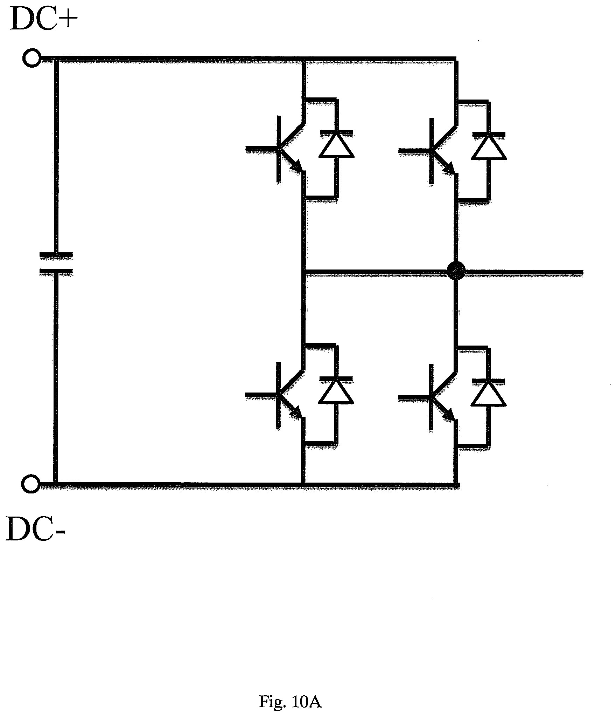

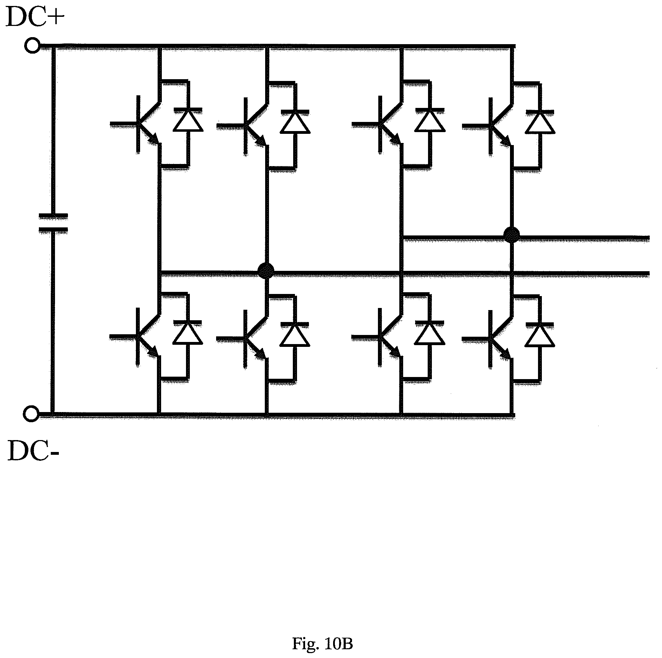

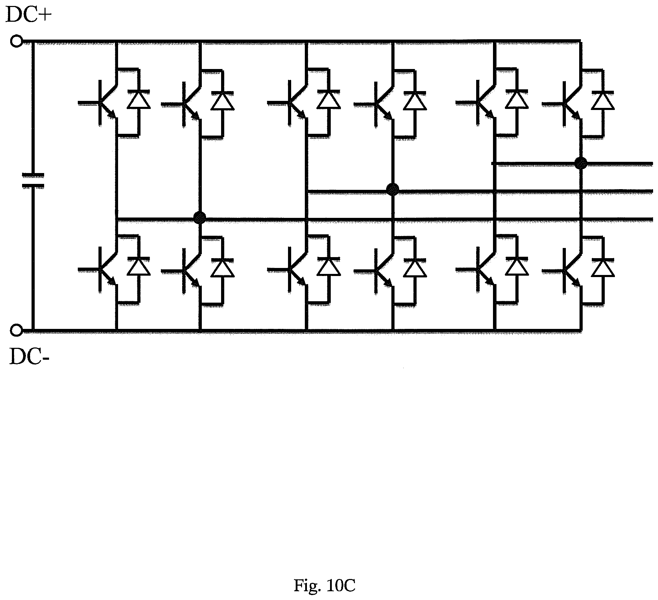

Figs. 10A-10C schematically show circuit diagrams of a power conversion circuit. The power conversion circuit is a main circuit of the power module, and according to an integration level of the number of phases, it may be divided into: a circuit composed of a single switch group, a single-phase circuit, a two-phase circuit and a three-phase circuit. Fig. 10A shows a single-phase circuit topology, containing two parallel bridge arms. The single-phase circuit inputs/outputs a single-phase AC power. Fig. 10B shows a two-phase circuit topology, containing four parallel bridge arms. The two-phase circuit inputs/outputs a two-phase AC power. Fig. 10C shows a three-phase circuit topology, containing six parallel bridge arms. The three-phase circuit inputs/outputs a three-phase AC power. The circuit composed of a single switch group is difficult to optimize due to limitation of the layout. The two-phase circuit or three-phase circuit is integrated in a power module, whose size and weight are difficult to control and the expansion of the power level is limited. In contrast, the power module integrated with a single-phase circuit has a high degree of flexibility. The converter system will contain a plurality of power modules. For example, the converter system at least needs to contain six single-phase power modules, in order to achieve AC/AC power conversion.

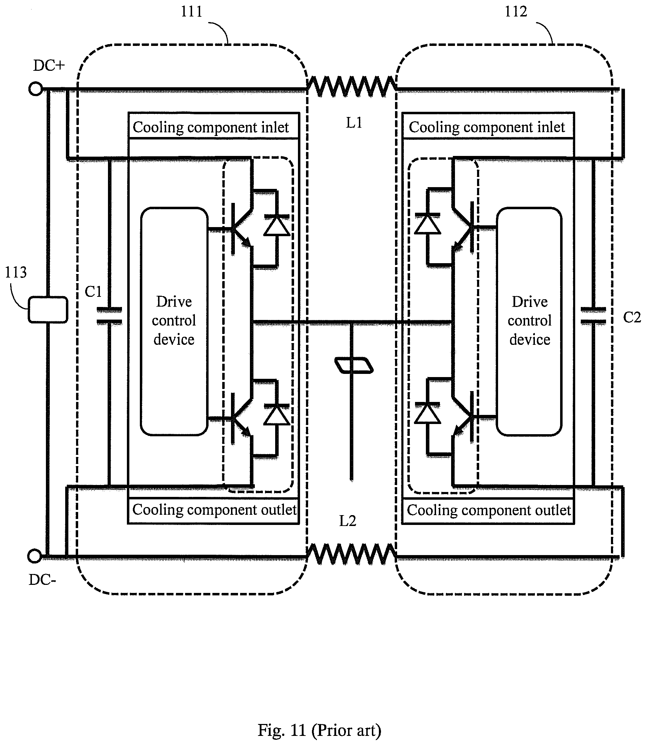

In general, if the converter system is applied in high-voltage and high-power occasions, the power module needs to be connected in parallel to increase output capacity (such as a power level) of the system. Fig. 11 schematically shows a circuit block diagram of parallel power modules in the prior art. The first power module 111 and the second power module 112 are connected in parallel, and specific structures of the power modules 111, 112 are not described in detail. After the power module is connected in parallel, the current acquired by the system is the total current after two modules are connected in parallel. If the system detects that an overcurrent fault has occurred during the operation, it cannot determine which module of the two power modules has an overcurrent fault or both power modules have the overcurrent fault. In addition, the bus voltage acquired by this system will only acquire the voltage above the DC busbar, rather than the bus voltage across the switching element inside the power module. This parameter acquisition manner has relatively large limitation.

There is also a case where the existing power modules are connected in parallel. When the power module 112 is short-circuited, voltage spikes will generate at a switching instant of the switching device. Since presence of electrically connected stray inductors (e.g., L1 and L2) inside the power module and presence of a large DC bus support capacitor C1 in power module 111, a voltage sensor 113 between DC+ and DC- will not detect such a voltage spike. In subsequent fault analysis, a fault judgment basis is lost, or even error analysis will be caused.

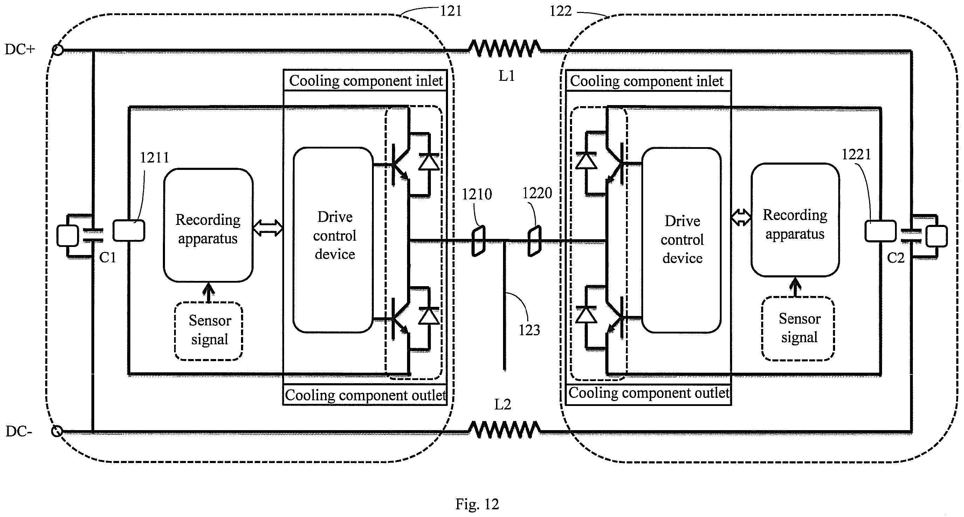

The power module provided by the present disclosure solves the above problems well. Fig. 12 schematically shows a circuit block diagram of parallel power modules according to the present disclosure. The power module 121 and the power module 122 are connected in parallel. Specific structures of the power modules 121 and 122 are described with reference to the above embodiments, which will not be detailed herein. With the power module integrated with a recording apparatus of the present disclosure, each power module itself has a parameter acquisition detection function, such as current detection and voltage detection. By way of example, the power module 121 has a current sensor 1210 which detects a current output from its AC busbar. The power module 122 has a current sensor 1220 which detects a current output from its AC busbar, instead only detects a current of the AC busbar 123 as shown in Fig. 11. The DC terminals of the power module 121 and the DC terminals of the power module 122 are connected to the DC terminals DC+ and DC- through the DC busbars. The power module 121 contains a voltage sensor 1211 to detect its bus voltage. The power module 122 contains a voltage sensor 1221 to detect its bus voltage, instead directly detect a voltage between the DC+ and DC- as shown in Fig. 11. Once the module is abnormal, it can be very intuitively and quickly determined that which specific power module is abnormal. At the same time, the voltage detection directly measures a bus voltage across the switching element, to ensure that the acquired and stored waveforms are the most realistic data of the module itself, which provides more effective analysis data for the maintainer.

Fig. 12 shows only two power modules 121 and 122. However, those skilled in the art should understand that the present disclosure is not limited thereto and the converter may also include, for example, three, four or more power modules according to design requirement of the circuit.

The present disclosure also discloses a converter including the above-described power modules. In general, the converter includes a plurality of the above power modules. A part or all of the power modules are connected in parallel with each other, to expand the output level of the converter. The power modules and the converter system transmit information by means of coding. When the converter system requests to read fault information or fault waveforms, the power module may transmit the data to the converter system via the coding form. When the converter system needs to clear the fault and other measures, the power module will take appropriate measures.

In the power module, recording method and recording apparatus of the power module provided by the present disclosure, the real-time information of the power module is acquired, the key parameters are calculated, the fault type information is stored, and the fault information are recorded in real time, which overcomes the limitation of storing waveforms based on a system level and the difficulty of finding the fault cause of the module.

Other embodiments of the present disclosure will be apparent to those skilled in the art from consideration of the specification and practice of the present disclosure disclosed herein. The present application is intended to cover any variations, uses, or adaptive changes of the present disclosure following the general principles thereof and including such departures from the present disclosure as come within known or customary practice in the art. It is intended that the specification and embodiments be considered as exemplary only, with a true scope of the present invention being indicated by the appended claims.

## Claims

1. A recording method of a power module, comprising:
step 1: acquiring (S110) a plurality of operating parameters of the power module through an acquiring unit;
step 2: reading and processing (S120) the operating parameters through a processor, to obtain a plurality of real-time parameters of the power module;
step 3: storing (S130) the real-time parameters in a first storage unit after the power module starts operating; and
step 4: when the processor determines that an abnormality occurs in the power module, storing (S150) corresponding fault information and the real-time parameters of the power module in corresponding storage addresses of a second storage unit obtained according to a preset strategy,
the recording method being **characterized in that** the second storage unit stores fault information of a plurality of faults occurring in the power module and the real-time parameters of the power module within a certain period of time before and after occurrence of each fault for the most recent N faults, wherein N is a positive integer; and
the fault information contains a fault occurrence time obtained by reading the time of a real-time clock, a fault position and a fault type determined by the processor.

2. The recording method of a power module according to claim 1, wherein the real-time parameters of the power module comprise the operating parameters after sampling processing and a plurality of core data parameters of the power module calculated according to the operating parameters.

3. The recording method of a power module according to claim 1, wherein the step 3 comprises:
presetting a time length T, the first storage unit storing the real-time parameters within the time length T, and circularly updating data in the first storage unit when no abnormality occurs in the power module; when the abnormality occurs in the power module, a timer begins to timekeeping, when the timer does not reach a time length of T/2, continuously updating the data in the first storage unit, and when the timer reaches the time length of T/2, stopping updating the data in the first storage unit.

4. The recording method of a power module according to claim 3, wherein the step 4 comprises:
step 41: reading time of a real-time clock and a total number of faults in the second storage unit, increasing the total number of the faults by one, and updating the total number of the faults in the second storage unit;
step 42: calculating the storage addresses of fault information and the real-time parameters corresponding to a current fault in the second storage unit, according to the updated total number of the faults; and
step 43: when the abnormality occurs in the power module, the timer starts timekeeping, when the timer reaches the time length of T/2, storing the fault information and the real-time parameters stored in the first storage unit corresponding to the current fault in the storage addresses described in the step 42.

5. The recording method of a power module according to claim 3 or 4 wherein when the timer reaches the time length of T/2, the first storage unit storing the real-time parameters within the time length of T/2 before the abnormality occurs in the power module and the real-time parameters within the time length of T/2 after the abnormality occurs in the power module.

6. The recording method of a power module according to claim 3, further comprising a step 5:
according to the real-time parameters stored in the second storage unit, generating a plurality of real-time parameter waveforms corresponding to any one or more of the most recent N faults.

7. The recording method of a power module according to claim 1, further comprising:
the power module transmitting the fault information and the corresponding real-time parameters to a system by coding.

8. A recording apparatus within a power module, comprising:
an acquiring unit (410), configured to acquire a plurality of operating parameters of the power module;
a processor (420), configured to read and process the operating parameters, to obtain a plurality of real-time parameters of the power module;
a first storage unit (430), configured to store the real-time parameters after the power module starts operating; and
a second storage unit (440), configured to store corresponding fault information and the real-time parameters of the power module in corresponding storage addresses obtained according to a preset strategy, when the processor (420) determines that an abnormality occurs in the power module,
the recording apparatus being **characterized in that** the second storage unit (440) is able to implement storing fault information of a plurality of faults occurring in the power module and record the real-time parameters of the power module within a certain period of time before and after occurrence of each fault for the most recent N faults, wherein N is a positive integer; and
the fault information contains a fault occurrence time obtained by reading the time of a real-time clock, a fault position and a fault type determined by the processor (420).

9. The recording apparatus within a power module according to claim 8, wherein the processor (420) conducts sampling processing on the operating parameters of the power module and calculates a plurality of core data parameters of the power module according to the operating parameters of the power module,
wherein the real-time parameters of the power module comprise the operating parameters after sampling processing and the calculated core data parameters of the power module.

10. The recording apparatus within a power module according to claim 8 or 9, wherein a time length T is preset, the first storage unit (430) stores the real-time parameters within the time length T, and data in the first storage unit (430) is circularly updated when no abnormality occurs in the power module; when the abnormality occurs in the power module, a timer begins to timekeeping, when the timer does not reach a time length of T/2, the data in the first storage unit (430) is continuously updated, and when the timer reaches the time length of T/2, the data in the first storage unit (430) is stopped updating.

11. The recording apparatus within a power module according to claim 10, further comprising:
a real-time clock,
wherein when the abnormality occurs in the power module, the processor (420) reads time of the real-time clock and a total number of faults in the second storage unit (440), increases the total number of the faults by one, and updates the total number of the faults in the second storage unit (440), according to the updated total number of the faults, calculates the storage addresses of fault information and the real-time parameters corresponding to a current fault in the second storage unit (440); the timer starts timekeeping, when the timer reaches the time length of T/2, stores the fault information and the real-time parameters in the first storage unit (430) corresponding to the current fault in the calculated storage addresses.

12. The recording apparatus within a power module according to claim 10 or 11, wherein when the timer reaches the time length of T/2, the first storage unit (430) stores the real-time parameters within the time length of T/2 before the abnormality occurs in the power module and the real-time parameters within the time length of T/2 after the abnormality occurs in the power module.

13. The recording apparatus within a power module according to claim 8, further comprising:
a fault waveform generating unit (570), configured to generate a plurality of real-time parameter waveforms corresponding to any one or more of the most recent N faults, according to the real-time parameters stored in the second storage unit (440).

## Patentansprüche

1. Aufzeichnungsverfahren eines Energiemoduls, umfassend:
Schritt 1: Erfassen (S110) mehrerer Betriebsparameter des Energiemoduls durch eine Erfassungseinheit,
Schritt 2: Lesen und Verarbeiten (S120) der Betriebsparameter durch einen Prozessor, um mehrere Echtzeitparameter des Energiemoduls zu erhalten,
Schritt 3: Speichern (S130) der Echtzeitparameter in einer ersten Speichereinheit, nachdem das Energiemodul mit dem Betrieb begonnen hat, und
Schritt 4: wenn der Prozessor feststellt, dass eine Anomalie in dem Energiemodul aufgetreten ist, Speichern (S150) entsprechender Fehlerinformationen und der Echtzeitparameter des Energiemoduls in entsprechenden Speicheradressen einer zweiten Speichereinheit, die gemäß einer voreingestellten Strategie erhalten werden,
wobei das Aufzeichnungsverfahren **dadurch gekennzeichnet ist, dass** die zweite Speichereinheit Fehlerinformationen mehrerer Fehler, die in dem Energiemodul auftreten, und die Echtzeitparameter des Energiemoduls innerhalb eines bestimmten Zeitraums vor und nach Auftreten jedes Fehlers für die letzten N Fehler speichert, wobei N eine positive ganze Zahl ist, und
die Fehlerinformationen einen Fehlerauftrittszeitpunkt, der durch Auslesen der Zeit einer Echtzeituhr erhalten wird, eine Fehlerposition und einen Fehlertyp, der von dem Prozessor festgestellt wird, enthalten.

2. Aufzeichnungsverfahren eines Energiemoduls nach Anspruch 1, wobei die Echtzeitparameter des Energiemoduls die Betriebsparameter nach Abtastverarbeitung und mehrere Kerndatenparameter des Energiemoduls, die gemäß den Betriebsparametern berechnet werden, umfassen.

3. Aufzeichnungsverfahren eines Energiemoduls nach Anspruch 1, wobei der Schritt 3 umfasst:
Voreinstellen einer Zeitdauer T, Speichern der Echtzeitparameter innerhalb der Zeitdauer T durch die erste Speichereinheit und umlaufendes Aktualisieren von Daten in der ersten Speichereinheit, wenn keine Anomalie in dem Energiemodul auftritt, wenn die Anomalie in dem Energiemodul auftritt, Beginnen mit einer Zeitmessung durch einen Zeitgeber, wenn der Zeitgeber eine Zeitdauer von T/2 nicht erreicht, kontinuierliches Aktualisieren der Daten in der ersten Speichereinheit und, wenn der Zeitgeber die Zeitdauer von T/2 erreicht, Stoppen des Aktualisierens der Daten in der ersten Speichereinheit.

4. Aufzeichnungsverfahren eines Energiemoduls nach Anspruch 3, wobei der Schritt 4 umfasst:
Schritt 41: Auslesen einer Zeit einer Echtzeituhr und einer Gesamtzahl von Fehlern in der zweiten Speichereinheit, Erhöhen der Gesamtzahl der Fehler um eins und Aktualisieren der Gesamtzahl der Fehler in der zweiten Speichereinheit,
Schritt 42: Berechnen der Speicheradressen von Fehlerinformationen und der Echtzeitparameter entsprechend einem aktuellen Fehler in der zweiten Speichereinheit gemäß der aktualisierten Gesamtzahl der Fehler, und
Schritt 43: wenn die Anomalie in dem Energiemodul auftritt, Beginnen mit einer Zeitmessung durch den Zeitgeber, wenn der Zeitgeber die Zeitdauer von T/2 erreicht, Speichern der Fehlerinformationen und der Echtzeitparameter, die in der ersten Speichereinheit gespeichert sind, entsprechend dem aktuellen Fehler in den im Schritt 42 beschriebenen Speicheradressen.

5. Aufzeichnungsverfahren eines Energiemoduls nach Anspruch 3 oder 4, wobei, wenn der Zeitgeber die Zeitdauer von T/2 erreicht, die erste Speichereinheit die Echtzeitparameter innerhalb der Zeitdauer von T/2, bevor die Anomalie in dem Energiemodul auftritt, und die Echtzeitparameter innerhalb der Zeitdauer von T/2, nachdem die Anomalie in dem Energiemodul aufgetreten ist, speichert.

6. Aufzeichnungsverfahren eines Energiemoduls nach Anspruch 3, ferner umfassend einen Schritt 5:
gemäß den in der zweiten Speichereinheit gespeicherten Echtzeitparametern Erzeugen mehrerer Echtzeitparameterwellenformen, die einem oder mehreren beliebigen der letzten N Fehler entsprechen.

7. Aufzeichnungsverfahren eines Energiemoduls nach Anspruch 1, ferner umfassend:
Übertragen der Fehlerinformationen und der entsprechenden Echtzeitparameter an ein System mittels Codierung durch das Energiemodul.

8. Aufzeichnungsvorrichtung innerhalb eines Energiemoduls, umfassend:
eine Erfassungseinheit (410), die dazu ausgestaltet ist, mehrere Betriebsparameter des Energiemoduls zu erfassen,
einen Prozessor (420), der dazu ausgestaltet ist, die Betriebsparameter auszulesen und zu verarbeiten, um mehrere Echtzeitparameter des Energiemoduls zu erhalten,
eine erste Speichereinheit (430), die dazu ausgestaltet ist, die Echtzeitparameter zu speichern, nachdem das Energiemodul mit dem Betrieb begonnen hat, und
eine zweite Speichereinheit (440), die dazu ausgestaltet ist, entsprechende Fehlerinformationen und die Echtzeitparameter des Energiemoduls in entsprechenden Speicheradressen, die gemäß einer voreingestellten Strategie erhalten werden, zu speichern, wenn der Prozessor (420) feststellt, dass eine Anomalie in dem Energiemodul aufgetreten ist,
wobei die Aufzeichnungsvorrichtung **dadurch gekennzeichnet ist, dass** die zweite Speichereinheit (440) dazu imstande ist, eine Speicherung von Fehlerinformationen mehrerer Fehler, die in dem Energiemodul auftreten, umzusetzen und die Echtzeitparameter des Energiemoduls innerhalb eines bestimmten Zeitraums vor und nach dem Auftreten jedes Fehlers für die letzten N Fehler aufzuzeichnen, wobei N eine positive ganze Zahl ist, und
die Fehlerinformationen einen Fehlerauftrittszeitpunkt, der durch Auslesen der Zeit einer Echtzeituhr erhalten wird, eine Fehlerposition und einen Fehlertyp, der durch den Prozessor (420) festgestellt wird, enthalten.

9. Aufzeichnungsvorrichtung innerhalb eines Energiemoduls nach Anspruch 8, wobei der Prozessor (420) eine Abtastverarbeitung an den Betriebsparametern des Energiemoduls durchführt und mehrere Kerndatenparameter des Energiemoduls gemäß den Betriebsparametern des Energiemoduls berechnet,
wobei die Echtzeitparameter des Energiemoduls die Betriebsparameter nach der Abtastverarbeitung und die berechneten Kerndatenparameter des Energiemoduls umfassen.

10. Aufzeichnungsvorrichtung innerhalb eines Energiemoduls nach Anspruch 8 oder 9, wobei eine Zeitdauer T voreingestellt wird, die erste Speichereinheit (430) die Echtzeitparameter innerhalb der Zeitdauer T speichert und die Daten in der ersten Speichereinheit (430) umlaufend aktualisiert werden, wenn keine Anomalie in dem Energiemodul auftritt, wenn die Anomalie in dem Energiemodul auftritt, ein Zeitgeber mit einer Zeitmessung beginnt, wenn der Zeitgeber eine Zeitdauer von T/2 nicht erreicht, die Daten in der ersten Speichereinheit (430) kontinuierlich aktualisiert werden und, wenn der Zeitgeber die Zeitdauer von T/2 erreicht, das Aktualisieren der Daten in der ersten Speichereinheit (430) gestoppt wird.

11. Aufzeichnungsvorrichtung innerhalb eines Energiemoduls nach Anspruch 10, ferner umfassend:
eine Echtzeituhr,
wobei, wenn die Anomalie in dem Energiemodul auftritt, der Prozessor (420) eine Zeit der Echtzeituhr und eine Gesamtzahl von Fehlern in der zweiten Speichereinheit (440) ausliest, die Gesamtzahl der Fehler um eins erhöht und die Gesamtzahl der Fehler in der zweiten Speichereinheit (440) aktualisiert, gemäß der aktualisierten Gesamtzahl der Fehler die Speicheradressen von Fehlerinformationen und die Echtzeitparameter entsprechend einem aktuellen Fehler in der zweiten Speichereinheit (440) berechnet, der Zeitgeber mit einer Zeitmessung beginnt, wenn der Zeitgeber die Zeitdauer von T/2 erreicht, die Fehlerinformationen und die Echtzeitparameter in der ersten Speichereinheit (430) entsprechend dem aktuellen Fehler in den berechneten Speicheradressen speichert.

12. Aufzeichnungsvorrichtung innerhalb eines Energiemoduls nach Anspruch 10 oder 11, wobei, wenn der Zeitgeber die Zeitdauer von T/2 erreicht, die erste Speichereinheit (430) die Echtzeitparameter innerhalb der Zeitdauer von T/2, bevor die Anomalie in dem Energiemodul auftritt, und die Echtzeitparameter innerhalb der Zeitdauer von T/2, nachdem die Anomalie in dem Energiemodul aufgetreten ist, speichert.

13. Aufzeichnungsvorrichtung innerhalb eines Energiemoduls nach Anspruch 8, ferner umfassend:
eine Fehlerwellenformerzeugungseinheit (570), die dazu ausgestaltet ist, mehrere Echtzeitparameterwellenformen, die einem oder mehreren beliebigen der letzten N Fehler entsprechen, gemäß den in der zweiten Speichereinheit (440) gespeicherten Echtzeitparametern zu erzeugen.

## Revendications

1. Procédé d'enregistrement d'un module de puissance, comprenant les étapes ci-dessous consistant à :
étape 1 : acquérir (S110) une pluralité de paramètres de fonctionnement du module de puissance à travers une unité d'acquisition ;
étape 2 : lire et traiter (S120) les paramètres de fonctionnement par le biais d'un processeur, en vue d'obtenir une pluralité de paramètres en temps réel du module de puissance;
étape 3 : stocker (S130) les paramètres en temps réel dans une première unité de stockage après que le module de puissance a commencé à fonctionner ; et
étape 4 : lorsque le processeur détermine qu'une anomalie se produit dans le module de puissance, stocker (S150) des informations de panne correspondantes et les paramètres en temps réel du module de puissance dans des adresses de stockage correspondantes d'une seconde unité de stockage, obtenues selon une stratégie prédéfinie ;
le procédé d'enregistrement étant **caractérisé en ce que** la seconde unité de stockage stocke des informations de panne d'une pluralité de pannes se produisant dans le module de puissance et les paramètres en temps réel du module de puissance, au cours d'une période de temps donnée, avant et après l'occurrence de chaque panne pour les « N » pannes les plus récentes, dans lequel « N » correspond à un nombre entier positif ; et
les informations de panne contiennent une heure d'occurrence de panne obtenue en lisant l'heure d'une horloge en temps réel, une position de panne et un type de panne déterminés par le processeur.

2. Procédé d'enregistrement d'un module de puissance selon la revendication 1, dans lequel les paramètres en temps réel du module de puissance comprennent les paramètres de fonctionnement après un traitement d'échantillonnage, et une pluralité de paramètres de données de base du module de puissance, calculés selon les paramètres de fonctionnement.

3. Procédé d'enregistrement d'un module de puissance selon la revendication 1, dans lequel l'étape 3 consiste à :
prédéfinir une durée « T », la première unité de stockage stockant les paramètres en temps réel au cours de la durée « T », et mettre à jour de manière circulaire des données dans la première unité de stockage lorsqu'aucune anomalie ne se produit dans le module de puissance ; lorsque l'anomalie se produit dans le module de puissance, un temporisateur commence à chronométrer, et lorsque le temporisateur n'atteint pas une durée égale à « T/2 », mettre à jour en continu les données dans la première unité de stockage, et lorsque le temporisateur atteint la durée égale à « T/2 », interrompre la mise à jour des données dans la première unité de stockage.

4. Procédé d'enregistrement d'un module de puissance selon la revendication 3, dans lequel l'étape 4 comprend les étapes ci-dessous consistant à :
étape 41 : lire l'heure d'une horloge en temps réel et un nombre total de pannes dans la seconde unité de stockage, augmenter le nombre total de pannes de « un », et mettre à jour le nombre total de pannes dans la seconde unité de stockage ;
étape 42 : calculer les adresses de stockage des informations de panne et les paramètres en temps réel correspondant à une panne en cours dans la seconde unité de stockage, selon le nombre total mis à jour des pannes ; et
étape 43 : lorsque l'anomalie se produit dans le module de puissance, le temporisateur commence à chronométrer, et lorsque le temporisateur atteint la durée égale à « T/2 », stocker les informations de panne et les paramètres en temps réel stockés dans la première unité de stockage correspondant à la panne en cours dans les adresses de stockage décrites dans le cadre de l'étape 42.

5. Procédé d'enregistrement d'un module de puissance selon la revendication 3 ou 4, dans lequel, lorsque le temporisateur atteint la durée égale à « T/2 », la première unité de stockage stocke les paramètres en temps réel au cours de la durée égale à « T/2 » avant que l'anomalie ne se produise dans le module de puissance, et les paramètres en temps réel au cours de la durée égale à « T/2 » dès lors que l'anomalie s'est produite dans le module de puissance.

6. Procédé d'enregistrement d'un module de puissance selon la revendication 3, comprenant en outre une étape 5 consistant à :
selon les paramètres en temps réel stockés dans la seconde unité de stockage, générer une pluralité de formes d'onde de paramètres en temps réel correspondant à l'une quelconque ou plusieurs des « N » pannes les plus récentes.

7. Procédé d'enregistrement d'un module de puissance selon la revendication 1, comprenant en outre l'étape dans laquelle : le module de puissance transmet les informations de panne et les paramètres en temps réel correspondants, à un système, par codage.

8. Appareil d'enregistrement dans un module de puissance, comprenant :
une unité d'acquisition (410), configurée de manière à acquérir une pluralité de paramètres de fonctionnement du module de puissance ;
un processeur (420), configuré de manière à lire et traiter les paramètres de fonctionnement, en vue d'obtenir une pluralité de paramètres en temps réel du module de puissance ;
une première unité de stockage (430), configurée de manière à stocker les paramètres en temps réel après que le module de puissance a commencé à fonctionner ; et
une seconde unité de stockage (440), configurée de manière à stocker des informations de panne correspondantes et les paramètres en temps réel du module de puissance dans des adresses de stockage correspondantes obtenues selon une stratégie prédéfinie, lorsque le processeur (420) détermine qu'une anomalie se produit dans le module de puissance ;
l'appareil d'enregistrement étant **caractérisé en ce que** la seconde unité de stockage (440) est apte à mettre en oeuvre le stockage d'informations de panne d'une pluralité de pannes se produisant dans le module de puissance, et à enregistrer les paramètres en temps réel du module de puissance au cours d'une période de temps donnée avant et après l'occurrence de chaque panne pour les « N » pannes les plus récentes, dans lequel « N » correspond à un nombre entier positif ; et
les informations de panne contiennent une heure d'occurrence de panne obtenue en lisant l'heure d'une horloge en temps réel, une position de panne et un type de panne déterminés par le processeur (420).

9. Appareil d'enregistrement dans un module de puissance selon la revendication 8, dans lequel le processeur (420) met en oeuvre un traitement d'échantillonnage sur les paramètres de fonctionnement du module de puissance et calcule une pluralité de paramètres de données de base du module de puissance selon les paramètres de fonctionnement du module de puissance ;
dans lequel les paramètres en temps réel du module de puissance comprennent les paramètres de fonctionnement après traitement d'échantillonnage et les paramètres de données de base calculés du module de puissance.

10. Appareil d'enregistrement dans un module de puissance selon la revendication 8 ou 9, dans lequel une durée « T » est prédéfinie, la première unité de stockage (430) stocke les paramètres en temps réel au cours de la durée « T », et des données dans la première unité de stockage (430) sont mises à jour de manière circulaire lorsqu'aucune anomalie ne se produit dans le module de puissance ; lorsque l'anomalie se produit dans le module de puissance, un temporisateur commence à chronométrer, et lorsque le temporisateur n'atteint pas une durée égale à « T/2 », les données dans la première unité de stockage (430) sont mises à jour en continu, et lorsque le temporisateur atteint la durée égale à « T/2 », la mise à jour des données dans la première unité de stockage (430) est interrompue.

11. Appareil d'enregistrement dans un module de puissance selon la revendication 10, comprenant en outre :
une horloge en temps réel ;
dans lequel, lorsque l'anomalie se produit dans le module de puissance, le processeur (420) lit l'heure de l'horloge en temps réel et un nombre total de pannes dans la seconde unité de stockage (440), augmente le nombre total des pannes de « un », et met à jour le nombre total des pannes dans la seconde unité de stockage (440), selon le nombre total mis à jour des pannes, et calcule les adresses de stockage d'informations de panne et les paramètres en temps réel correspondant à une panne en cours dans la seconde unité de stockage (440) ; le temporisateur commence à chronométrer, lorsque le temporisateur atteint la durée égale à « T/2 », les informations de panne et les paramètres en temps réel sont stockés dans la première unité de stockage (430) correspondant à la panne en cours dans les adresses de stockage calculées.

12. Appareil d'enregistrement dans un module de puissance selon la revendication 10 ou 11, dans lequel, lorsque le temporisateur atteint la durée égale à « T/2 », la première unité de stockage (430) stocke les paramètres en temps réel au cours de la durée égale à « T/2 » avant que l'anomalie ne se produise dans le module de puissance, et stocke les paramètres en temps réel au cours de la durée égale à « T/2 » dès lors que l'anomalie s'est produite dans le module de puissance.

13. Appareil d'enregistrement dans un module de puissance selon la revendication 8, comprenant en outre :
une unité de génération de formes d'onde de panne (570), configurée de manière à générer une pluralité de formes d'onde de paramètres en temps réel correspondant à l'une quelconque ou plusieurs des « N » pannes les plus récentes, selon les paramètres en temps réel stockés dans la seconde unité de stockage (440).
